# EUROPEAN PATENT APPLICATION

(11) **EP 2 662 726 A1**
(43) Date of publication of application: **13.11.2013**
(21) Application number: 12167707.4
(22) Date of filing: 11.05.2012
(51) Int. Cl.: G03B 13/18, G02B 7/04, G03B 17/56

(54) **A focusing aid device for a digital-single-lens-reflex camera**

(71) Applicant: Bestle, Nikolaj, 2100 Copenhagen Oe (DK)
(72) Inventor: Bestle, Nikolaj, 2100 Copenhagen Oe (DK)
(74) Representative: Hoffmann Dragsted A/S

(57) **Abstract**

The present invention relates to a focus device (100) to be applied on a digital-single-lens-reflex camera (19) comprising a lens (20) having a focus ring (21) which is rotatable and a non-rotating, fixed section (22), comprising a first element (8) having a sight (9), a second element (1) having an arc-shaped part (2) and at least two markers (15, 16, 17, 101) arranged on the arc-shaped part, wherein the first or second element is adapted for connection (6, 12) with the focus ring (21) of the lens (20) of the camera (19) and the other of the first or second element is adapted for connection with the non-rotating, fixed section (22) of the lens of the camera.

## Description

### Field of the Invention

The present invention relates to a focus device to be applied on a digital-single-lens-reflex camera comprising a lens having a focus ring which is rotatable and a non-rotating, fixed section, comprising a first element having a sight, a second element having an arc-shaped part and at least two markers arranged on the arc-shaped part.

### Background Art

The new era of video photography using digital-single-lens-reflex (DSLR) has contributed greatly to moving video towards a very high perceived quality, with a much more cinematic quality look and feel. One major and very important contributor to this is the opportunity of using shallow depth of field (DOF) when using cameras with a large image sensor combined with photographic lens with a large aperture (small f-stop). This optically isolates the subject from the background and gives the photographer an important tool for guiding the spectator to different areas of the field of view in a scene. It also gives the video a very intense and cinematic look.

In current available photographic equipment, there are very few, if any, ways of controlling focusing accurately. When recording video with very shallow depth of field, the control of focus is very critical and is very difficult to control by only turning the focus ring on a lens barrel as in regular still photography using manual focusing.

A secondary system connected to the focus ring of the lens is therefore needed to guide or measure or in other ways provide a more controlled movement of the focus ring.

Also, if the focus distance needs to change during the recording (moving fast and consistent from point A to B, also called a Rack Focus), multiple reference points or stops are needed for an adequate control or guidance of this transition.

A number of solutions (Focus Followers) are available on the market. Most of these solutions are adapted directly from large size movie production cameras and are very expensive and heavy and complex to mount and adjust.

The manual focusing process on DSLR has adopted tools such as "Follow focus", which usually are geared systems with a handle (knob) and require a large and heavy rig system in order to attach it in a fixed relation to the camera. Furthermore, the lens often needs to have a gear ring attached, which makes gear meshing and further complex adjustments necessary. Other systems rely on an angled connection of rubber wheels connecting the lens focus ring to a wheel handle by friction. Both these systems also have a limited ability to perform fast Rack Focus.

### Summary of the Invention

It is an object of the present invention to wholly or partly overcome the above disadvantages and drawbacks of the prior art. More specifically, it is an object to provide an improved focus device facilitating mounting on the camera and use.

The above objects, together with numerous other objects, advantages, and features, which will become evident from the below description, are accomplished by a solution in accordance with the present invention by a focus device to be applied on a digital-single-lens-reflex camera comprising a lens having a focus ring which is rotatable and a non-rotating, fixed section, comprising a first element having a sight, a second element having an arc-shaped part and at least two markers arranged on the arc-shaped part, wherein the first or second element is adapted for connection with the focus ring of the lens of the camera and the other of the first or second element is adapted for connection with the non-rotating, fixed section of the lens of the camera.

Hereby a focus device is obtained, which is easy to attach to the camera. Furthermore, the focus device according to the present invention has a flexible design and is lightweight in comparison with the known focus devices on the market. It is furthermore an advantage that both the first and second elements are attached directly to the lens of the camera so that none of the elements of the focus device need to be attached directly to the camera housing or body, and no additional rig systems for the specific focus device is necessary as is the case with the known focus devices.

Compared with most known follow focus systems, the large arc-shaped part also represents a visual reference or representation of the entire focus range of most common lenses with a mechanical rotation of up 200 degrees. This is particular helpful for guidance during more improvised long travels in focus from a focus point nearby to a focus point far away, also known as a racking focus.

Furthermore, the first element may be adapted for connection with the focus ring of the lens of the camera and the second element may be adapted for connection with the non-rotating, fixed section of the lens of the camera. This way of attachment eliminates the need for additional mounts or rigs for the camera.

Moreover, the arc-shaped part may comprise indicators extending in an extension of the arc-shaped part, the indicators possibly functioning as the markers. The indicators may be a graphic scale in degrees, providing additional help for locating and remembering focus distance point. The graphic scale may also be interchangeable, either by a replaceable sticker or arc-shaped plastic piece. This provides the opportunity of using a custom non-linear graphics scale with distance indication corresponding to a specific lens. This distance indication is already marked on most lenses and is often visible through a small window.

Additionally, two or more add-on markers may be arranged on the arc-shaped part.

Also, the add-on markers may be adapted to be slidable along the extension of the arc-shaped part and be secured to the arc-shaped part at desired positions.

Furthermore, the add-on markers may be adapted to be clicked on at desired positions on the arc-shaped part. By clicking the markers on and off, the arc-shaped part makes the change of marker points faster and more accurate, with a reduced risk of misaligning or offsetting the entire system on the lens.

Moreover, the add-on marker may have a hook-shaped configuration comprising first and second outer projections mutually defining a space between them, whereby the space is adapted to partly contain the arc-shaped part when the marker is clicked onto the arc-shaped part.

Additionally, the marker may comprise a first end and a second end, the first end having the hook-shaped configuration enabling it to be clicked onto the arc-shaped part, and the second end projecting from the first end and having a predetermined length.

Also, the marker may be clicked onto the arc-shaped part so that the second end extends in a radial direction of the arc-shaped part, or so that the second end projects out and away from the arc-shaped part.

Furthermore, the marker, when projecting out and away from the arc-shaped part, may overlap the first element, thereby providing a stop for the second element. Using the same marker in two different orientations for both visual marking and actual stop reduces the number of different parts in the system.

Moreover, the first element and the second element may comprise attachments arrangements adapted to attach the first and second elements to the focus ring and the non-rotating, fixed section of the lens of the camera, respectively.

Additionally, the attachment means may comprise an arc-shaped extension being part of a circle and having a circumference which is smaller than a circumference of the focus ring and the non-rotating, fixed section of the lens of the camera.

Also, the attachment means may comprise a locking arrangement adapted for securing the attachment of the elements to the lens of the camera.

Furthermore, the locking arrangement may be a hose clamp, an elastic strap or a hook and loop strap.

Moreover, the attachment means may be made of a plastic material, whereby the attachment means may be flexible which facilitate the mounting of the elements to the lens.

Additionally, the attachment means may comprise an inner side and an outer side.

Also, the outer side may comprise a plurality of hooks arranged with a predetermined distance between them, each position of a hook corresponding to a predetermined diameter of a camera lens.

Furthermore, the inner side may comprise friction enhancing means, such as rubber or foam pads positioned with predetermined distances between them, or a continuous strip of foam or rubber extending along the inner side. This system provides a firm and stable grip under constant mild tension that does not damage the camera lens, yet does not loosen by itself.

Moreover, the arc-shaped part of the second element may be positioned at a radial distance from the attachment means.

Additionally, a handle may be arranged in connection with the arc-shaped part. As the handle is attached to the arc perimeter, it extends the rotation leverage of the lens to an even large diameter, providing the user with an even higher accuracy for the focus operation.

Also, the handle may be shaped in a thin flexible geometry that provides damping of unstable hand movements.

Furthermore, the handle may be detachably arranged. Removal of the handle reduces the invention in size, making it even more portable (pocketable). As the handle can be repositioned at any point on the arc, the user can select the position which is most comfortable for the current situation, also accommodating left/right hand preferences.

Moreover, the sight of the first element may be arranged on a lever extending in a radial distance from the lens.

Additionally, the sight has a well-defined fixed position on the first element, preventing inaccurate reading/sighting caused by parallax error. Giving the user a single point of sight provides a more comfortable and accurate operation when using the visual markers.

Also, the sight of the first element may be arranged at a greater distance from the lens than the arc-shaped part of the second element.

Furthermore, the focus device may be made of a plastic material such as Polycarbonate, ABS or PC/ABS. It is hereby possible to provide a lightweight focus device. Having lightweight sturdy accessories that do not require further mounting accessories is of utmost importance for many travelling photographers, as photographing equipment in size and weight often reaches the limitation set by airline security regulations.

The present invention also relates to a focus system comprising a digital-single-lens-reflex camera and a focus device comprising any of the above-mentioned technical features.

Furthermore, the camera may be placed on a tripod.

The present invention also relates to a method for applying a focus device comprising any of the above-mentioned technical features on a digital-single-lens-reflex camera, comprising a lens having a focus ring which is rotatable and a non-rotating, fixed section, comprising the steps of:
- placing a first element having a sight on the non-rotating, fixed section of the lens of the camera,
- attaching the first element to the non-rotating, fixed section by the locking arrangement of the first element,
- placing a second element having an arc-shaped part and at least two markers arranged on the arc-shaped part on the focus ring of the lens of the camera, and
- attaching the second element to the focus ring by the locking arrangement of the second element.

The present invention additionally relates to a method for setting up at least two focusing points in a recorded scene by applying a focus device with any of the above-mentioned technical features, comprising the steps of using the digital LCD magnifier, available in the camera, when not recording, in order to determine accurate sharpness during focus adjustment. The position of that specific point is saved for later use by placing a marker for that position on the arc-shaped part.

### Brief Description of the Drawings

The invention and its many advantages will be described in more detail below with reference to the accompanying schematic drawings, which for the purpose of illustration show some non-limiting embodiments and in which
Fig 1 shows a focus device according to the invention,
Fig. 2 shows the first and second elements of the focus device ready to be attached to a lens of a camera,
Fig. 3 shows the focus device being attached to the lens of the camera,
Fig. 4 shows the second element being attached to the focus ring of the lens of the camera,
Fig. 5 shows the attachment means of the second element securing attachment of the second element to the focus ring,
Fig. 6 shows a part of the first and second elements and an add-on marker clicked onto the arc-shaped part providing a stop for the second element,
Fig. 7 shows a part of the first and second elements and the add-on marker clicked onto the arc-shaped part providing an intermediate focus point between a near end point and a far end point, and
Figs. 8a-8c show a sequence of setting up the focus device according to the present invention at near end point, at intermediate point and at far end point.

All the figures are highly schematic and not necessarily to scale, and they show only those parts which are necessary in order to elucidate the invention, other parts being omitted or merely suggested.

### Detailed description of the invention

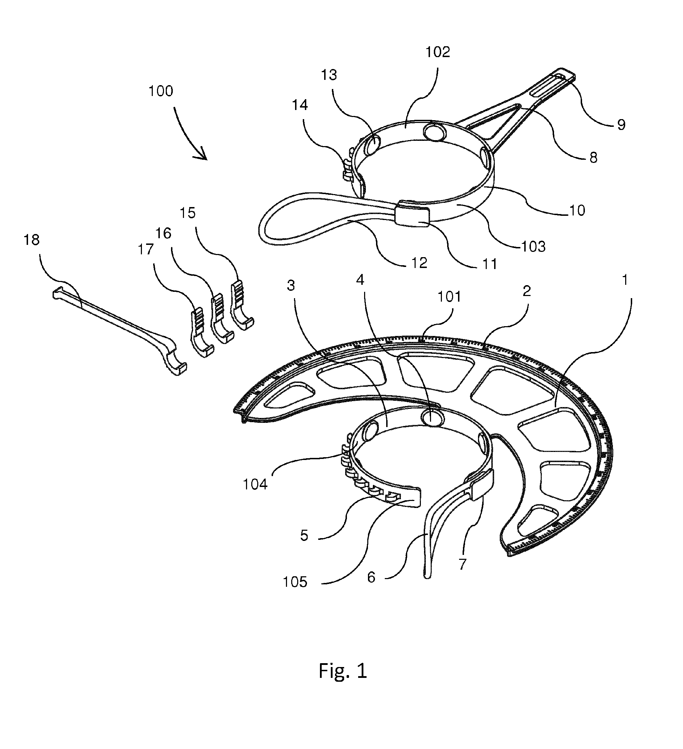

Fig. 1 shows the different elements and parts of a focus device 100 according to the invention. The different elements and parts shown in Fig. 1 may be sold in a focus device kit, as a ready to use kit.

The focus device 100 is to be applied on a digital-single-lens-reflex camera (not shown) comprising a lens having a focus ring being rotatable and a non-rotating, fixed section. The focus device 100 comprises a first element 8 having a sight 9, a second element 1 having an arc-shaped part 2 and at least two markers arranged on the arc-shaped part 2.

The at least two markers may be printed indicators 101 extending in a periphery extension of the arc-shaped part 2.

In addition, the markers may be add-on markers which may be clicked onto the arc-shaped part 2. Add-on markers 15, 16, 17 are shown in Fig. 1, which will be described in detail below.

Furthermore, the first 8 or second element 1 is adapted for connection with the focus ring (not shown) of the lens of the camera and the other of the first 8 or second element 1 is adapted for connection with the non-rotating, fixed section (not shown) of the lens of the camera. In the embodiments shown herein the first element 8 is connected with the non-rotating, fixed section (not shown) of the lens of the camera and the second element 1 is connected with the focus ring.

The first element 8 also comprises attachment arrangement 10 in the form of a flexible body part. The attachment arrangement 10 has an inner side 102 and an outer side 103. Friction enhancing means and/or support pads 13 is arranged on the inside for both protecting the lens as well as securing proper attachment between the first element 8 and the lens, whereby the sight 9 is fixed in its predetermined position and unintended displacement of the first element is avoided.

On the outer side 103, hooks 14 are arranged with a predetermined distance between them. Furthermore, a strap clamp 11 is arranged for securing a locking arrangement 12, here in the form of a flexible strap, such as a resilient 0-ring.

In the same manner the second element 1 also comprises attachment arrangement 3 in the form of a flexible body part. The attachment arrangement 3 has an inner side 104 and an outer side 105. Friction enhancing means and/or support pads 4 are arranged on the inside for both protecting the lens as well as securing proper attachment between the second element 1 and the lens, whereby the arc-shaped part is steady during rotation and unintended displacement of the second element is avoided during rotation.

For instance a number of rubber pads 4, 13 are arranged inside the attachment arrangements to ensure a stable high friction support toward the lens parts without regard to adjustment that could damage the lens.

The outer side 105 also has hooks 5 for the second element, said hooks 5 being arranged with a predetermined distance between them. Furthermore, a strap clamp 7 is arranged for securing a locking arrangement 6, here in the form of a flexible strap, such as a resilient 0-ring.

In another not shown embodiment, the locking arrangement may comprise a hose clamp or hook and loop straps, or the attachment arrangement may have a design which is adapted to snap onto the lens.

Furthermore, a handle 18 is shown in Fig. 1, which handle 18 may be clicked onto the arc-shaped part 2 in the same manner as the add-on markers.

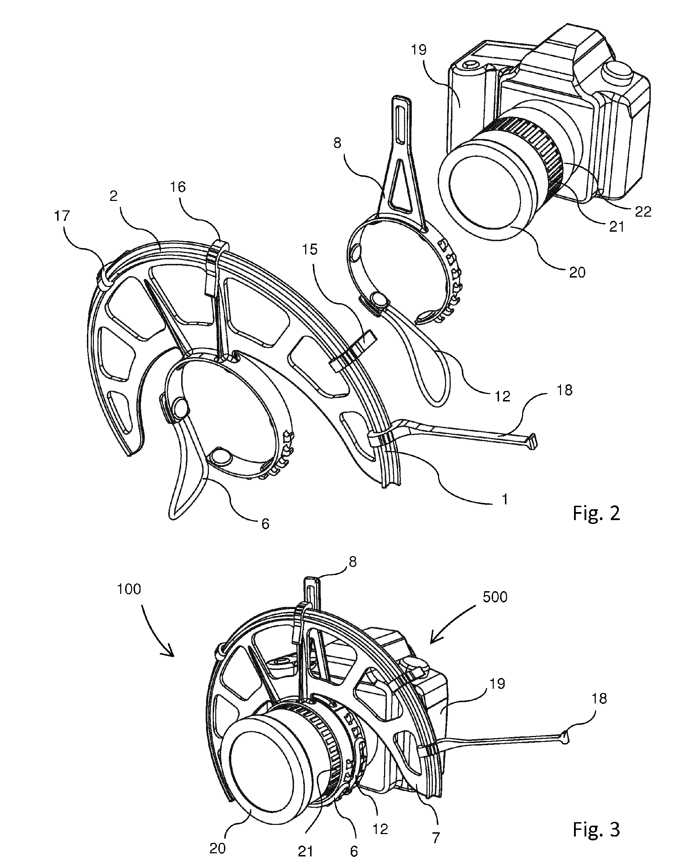

Fig. 2 shows a digital-single-lens-reflex camera 19 comprising a lens 20 having a focus ring 21 being rotatable and a non-rotating, fixed section 22. In front of the camera 19, the first element 8 is ready to be attached to the non-rotating, fixed section 22 of the lens of the camera, and the second element 1 is also ready to be attached to the focus ring 21. In this embodiment, three add-on markers 15, 16, 17 and the handle 18 have been clicked onto the arc-shaped part 2. The locking arrangements 6, 12 of the attachment arrangements are in their unlocked state so that the attachment arrangements may easily be arranged on the lens 20.

In Fig. 3, the focus device 100 has been applied on the lens 20 of the camera 19, in that the first element 8 is connected with the non-rotating, fixed section and the second element 1 is connected with the focus ring 21, thereby proving a focus system 500 according to the inventive concept. Both locking arrangements 6, 12 have been locked and tightened so that each first and second element 8, 1 is safely secured to the lens 20 of the camera.

The second element 1 has the arc-shaped part 2, which has a large diameter in comparison with the lens of the camera. When the second element 1 is connected with the focus ring 21 on the lens, it provides a geometric physical reference with a much larger diameter (3 times or more) than the actual Lens 20 diameter. This amplifies the movement of the perimeter of the focus ring 21.

The first element 8 is attached to a non-rotating, fixed section 22 of the lens close to the focus ring. The first element 8 can be positioned at any angle that might be comfortable for sighting. The first element 8 provides a single point of sighting 9, making alignment with the second element 1 accurate and repeatable. The movable second element 1 and the fixed first element 8 together provide a very accurate measure and rotation registration for the rotational travel of the focus ring.

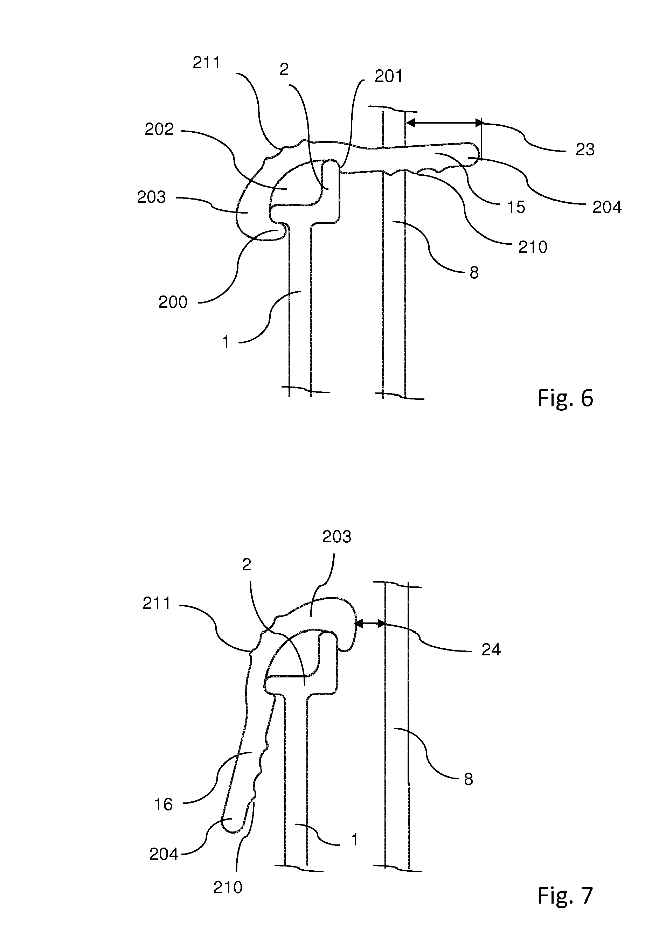

To complete the functionality, a number of add-on markers or Focus Point Clips 15, 16, 17 can be attached on the arc-shaped part 2 of the second element 1 at any location along the peripheral extension of the arc-shaped part 2. These can be mounted in two ways providing either a physical stop or a visual alignment of the second element 1 in relation the first element 8. This will be described in more detail below in connection with Figs. 6 and 7.

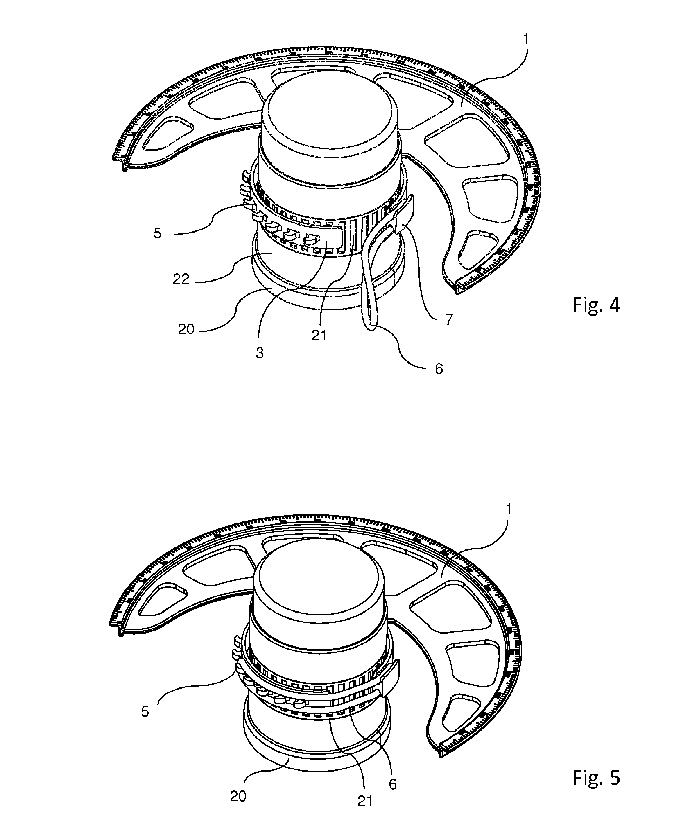

In Fig. 4, the second element has been mounted on the focus ring 21 of the lens. On the outer side of the attachment arrangement 3, a plurality of hooks 5 are arranged along the periphery of the attachment arrangement 3. Each position of a hook 5 corresponds to a specific diameter of a lens 20, so that the focus device may be applied and used in connection with a plurality of different lens types, brands and diameters. The locking arrangement 6, i.e. the resilient 0-ring, is safely secured and maintained in the strap clamp 7. Fig. 5 shows the locking arrangement 6 having been hooked on one of the hooks 5, thereby securely locking the second element 1 to the focus ring 21 of the lens 20.

Both elements of the focus device mount easily within seconds without any tools required. Apart from ensuring adequate spacing between the second element 1 and the first element 8 and a free rotational movement of the focus ring 21 with the second element 1 attached, there is no need for any further adjustments.

Once the markers have been set up on the second element 1, the second element 1 along with the focus ring 21 can be operated by the flexible handle 18.

In Fig. 6, a part of the second element 1 is shown in a cross-sectional view. In this embodiment, the arc-shaped part 2 has an L-shaped configuration. The add-on marker 15 has a hook-shaped configuration comprising first and second outer projections 200, 201 mutually defining a space 202 between them, whereby the space 202 is adapted to partly contain the arc-shaped part 2 when the marker 15 is clicked onto the arc-shaped part 2 as shown in Fig. 6. The projections 200, 201 are adapted to be clicked onto the outside of each end of the L-shaped configuration as shown in Fig. 6. Furthermore, the marker 15 comprises a first end 203 and a second end 204, the first end 203 having the hook-shaped configuration enabling it to be clicked onto the arc-shaped part 2, the second end 204 projecting from the first end 203 and having a predetermined length. As shown in Fig. 6, the marker 15 is clicked onto the arc-shaped part 2 so that the second end 204 projects out and away from the arc-shaped part 2. The marker 15, when projecting out and away from the arc-shaped part 2, overlaps the first element 8 as shown with the arrow 23, thereby providing a physical stop for the second element 1 when rotated.

In Fig. 7, the marker 16 being identically to marker 15 described above has been clicked onto the second element 1 so that the second end 204 extends radially from the arc-shaped part 2 along the second element 1 towards the lens. The first end 203 of the marker 16 ends a distance 24 from the first element 8, thereby providing a visual alignment of the second element 1 in relation the first element 8.

The markers 15, 16, 17 have a first area 210 and a second area 211, each provided with grip enhancing means for facilitating handling of the markers when they are being clicked on or off the arc-shaped part 2.

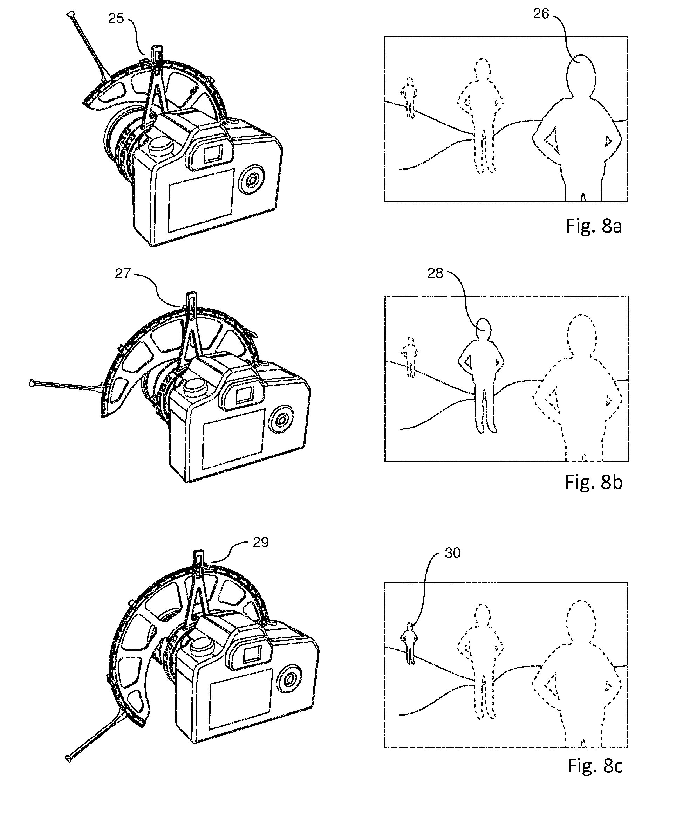

A number of markers or clips (Focus Point Clip) 15, 16, 17 can be mounted on second element 1 to provide either a stop or a visual alignment of the second element 1 movement in relation the fixed first element 8, as described in connection with Figs. 6 and 7. In the sequence of figures shown in Figs. 8a to 8c, the chosen locations 25, 29 on the second element 1 will provide a full stop of the rotation of the second element 1 (hence the rotation of the focus ring 21 of the lens) at both a near end focusing point 26 and a far end focusing point 30. In between, any number of markers or clips can be mounted in another orientation, providing a visual alignment point 27 as shown in Fig. 8b rather than a physical stop 25, 29 as shown in Fig. 8a and 8c, respectively. This is particularly useful when a recorded scene requires a focus distance change from a far end focusing point 30 to a near end focusing point 26, or vice versa, with an intermediate pause at one or more designated focusing points in between 28 (these will be found by using the visual alignment 27).

The positioning of the markers or clips relies very much on preparation of the scene before recording. Most DSLR's have an LCD magnifier (up to 10x) which will help locate the chosen focus distance point very accurately. Once the focus distances points have been positioned with their corresponding markers or clips 15, 16, 17 on the second element 1, the recording can begin. The camera operator will have a very clear overview of the focus points of interest mounted on the second element 1. The focusing during recording is now controlled by the detachable handle 18. The handle 18 clips onto the second element 1 at any point in order to accommodate the best possible ergonomics, using the same principle as the markers or Focus Point Clips 15, 16, 17. The handle 18 is also very flexible in order to minimise camera shake by the camera operator when the focus is changed.

By means of the present invention a focus device is obtained, which is a very lightweight and accurate system with no need for additional rigs or mounts attached to the camera. It can be used handheld or mounted on a simple tripod. The focus device attaches easily on most lenses in most sizes with no need for adapters.

Other special versions can be scaled to larger sizes in order to accommodate lenses in extreme sizes. The present invention mounts onto the lens only with no tools and can be removed from the camera along with the lens without changing the focus distance markers. Another lens with another sample of the invention can be mounted on the camera, should the photographer choose to change the lens temporarily, reverting quickly to the other configuration. The invention detaches very quickly and easily, is extremely lightweight and can be stored in a pocket.

Although the invention has been described in the above in connection with preferred embodiments of the invention, it will be evident for a person skilled in the art that several modifications are conceivable without departing from the invention as defined by the following claims.

## Claims

1. A focus device (100) to be applied on a digital-single-lens-reflex camera (19) comprising a lens (20) having a focus ring (21) which is rotatable and a non-rotating, fixed section (22), comprising:
- a first element (8) having a sight,
- a second element (1) having an arc-shaped part (2) and at least two markers (15, 16, 17, 101) arranged on the arc-shaped part (2),
wherein the first or second element (8, 1) is adapted for connection with the focus ring (21) of the lens (20) of the camera (19) and the other of the first or second element (8, 1) is adapted for connection with the non-rotating, fixed section (22) of the lens (20) of the camera (19).

2. A focus device (100) according to claim 1, wherein two or more add-on markers (15, 16, 17) are arranged on the arc-shaped part (2).

3. A focus device (100) according to claim 2, wherein the add-on markers (15, 16, 17) are adapted to be clicked on at desired positions on the arc-shaped part (2).

4. A focus device (100) according to claim 3, wherein the add-on marker (15, 16, 17) has a hook-shaped configuration comprising first and second outer projections (200, 201) mutually defining a space (202) between them, whereby the space (202) is adapted to partly contain the arc-shaped part (2) when the add-on marker is clicked on the arc-shaped part (2).

5. A focus device (100) according to claim 4, wherein the add-on marker (15, 16, 17) comprises a first end and a second end (203, 204), the first end (203) having the hook-shaped configuration enabling it to be clicked on the arc-shaped part (2), and the second end (204) projecting from the first end (203) and having a predetermined length.

6. A focus device (100) according to claim 5, wherein the add-on marker (15, 16, 17) is clicked on the arc-shaped part (2) so that the second end (204) extends in a radial direction of the arc-shaped part (2), or so that the second end (204) projects out and away from the arc-shaped part (2).

7. A focus device (100) according to claim 5 or 6, wherein the add-on marker (15, 16, 17), when projecting out and away from the arc-shaped part (2), overlaps the first element (8), thereby providing a stop for the second element (1).

8. A focus device (100) according to claim 1, wherein the first element (8) and the second element (1) comprise attachments arrangements (3, 10) adapted to attach the first and second elements (8, 1) to the focus ring (21) and the non-rotating, fixed section (22) of the lens of the camera, respectively.

9. A focus device (100) according to claim 8, wherein the attachment means (3, 10) comprises an arc-shaped extension being part of a circle and having a circumference which is smaller than a circumference of the focus ring (21) and the non-rotating, fixed section (22) of the lens of the camera.

10. A focus device (100) according to claim 8 or 9, wherein the attachment means (3, 10) comprises a locking arrangement (6, 12) adapted for securing the attachment of the elements (8, 1) to the lens of the camera.

11. A focus device (100) according to claim 10, wherein the locking arrangement (6, 12) is a hose clamp, an elastic strap or a hook and loop strap.

12. A focus device (100) according to claim 10, wherein the attachment means (3, 10) comprises an inner side (102, 104) and an outer side (103, 105), the outer side (103, 105) comprises a plurality of hooks (5, 14) arranged with a predetermined distance between them, each position of a hook (5, 14) corresponding to a predetermined diameter of a lens.

13. A focus device (100) according to claim 1, wherein the sight (9) of the first element (8) is arranged on a lever extending in a radial distance from the lens.

14. A focus system (500) comprising a digital-single-lens-reflex camera (19) and a focus device (100) according to any of the preceding claims.

15. A method for applying a focus device (100) according to any of the claims 1 to 13 on a digital-single-lens-reflex camera (19), comprising a lens (20) having a focus ring (21) which is rotatable and a non-rotating, fixed section (22), comprising the steps of:
- placing a first element (8) having a sight (9) on the non-rotating, fixed section (22) of the lens (20) of the camera (19),
- attaching the first element (8) to the non-rotating, fixed section (22) by the locking arrangement (12) of the first element (8),
- placing a second element (1) having an arc-shaped part (2) and at least two markers (15, 16, 17, 101) arranged on the arc-shaped part (2) on the focus ring (21) of the lens of the camera, and
- attaching the second element (1) to the focus ring (21) by the locking arrangement (6) of the second element (1).
